# EUROPEAN PATENT APPLICATION

(11) **EP 2 357 054 A1**
(43) Date of publication of application: **17.08.2011**
(21) Application number: 11154013.4
(22) Date of filing: 10.02.2011
(51) Int. Cl.: B23K 9/00, B23K 9/02, B23K 9/167, B23K 9/23, B23K 33/00, B23P 15/04, F01D 5/14, F01D 5/06, F01D 5/28, B23K 9/173, B23K 31/02

(54) **Horizontal welding method and joint structure therefor**

(30) Priority: 12.02.2010 US 704866
(71) Applicant: General Electric Company, Schenectady, NY 12345 (US)
(72) Inventor: Silvia, Alan Joseph, Schenectady, NY 12345 (US); Babcock, William Edward, Schenectady, NY 12345 (US); Ganesh, Swami, Schenectady, NY 12345 (US); Salkin, Jonathan T., York, PA 17406 (US); Schwant, Robin Carl, Schenectady, NY 12345 (US); Spiegel, Lyle B., Schenectady, NY 12345 (US)
(74) Representative: Gray, Thomas

(57) **Abstract**

Embodiments of the invention relate generally to welding methods and, more particularly, to methods for welding in a horizontal position and a joint structure suitable for such methods. In one embodiment, the invention provides a method of forming a welded joint between two components, the method comprising: aligning a first and second component (100, 200) to form a joint (300) therebetween, the joint (300) comprising: a protrusion (122) of the first component (100), and a recess (222) of the second component (200), wherein the protrusion (122) and recess (222) have complimentary shapes; orienting the first and second components (100, 200) such that a major axis (140, 240) of each is oriented vertically; and welding (730) the first and second components (100, 200) at a substantially horizontally-oriented root opening (310), the substantially horizontally-oriented root opening (310) positioned along the joint (300).

## Description

### BACKGROUND OF THE INVENTION

Embodiments of the invention relate generally to welding methods and, more particularly, to methods for welding in a horizontal position and a joint structure suitable for such methods.

The fabrication of steam turbine rotors and similar devices often involves gas-tungsten-arc welding (GTAW) of component parts. GTAW facilitates improved mechanical properties, including the ability to join components having different base materials, as is often desirable in high-performance machines. "Hot wire" GTAW, in which a filler metal is pre-heated to a temperature near its melting point before being introduced into the weld pool, is preferred in many instances because it is generally faster and more efficient than "cold wire" GTAW, which relies entirely on heat from the electric arc to melt the filler metal.

A deficiency of known GTAW methods, and particularly hot wire GTAW methods, is their limitation to welding in a flat position. That is, such methods involve welding with the electrode facing downward into the weld joint. As such, employing GTAW, and particularly hot wire GTAW, in the fabrication of steam turbine rotors and similar devices generally requires the manipulation and movement of large components in order to properly orient the weld joint. Such manipulation and movement necessarily decreases the efficiency and increases the cost of fabricating the device.

### BRIEF DESCRIPTION OF THE INVENTION

In one embodiment, the invention provides a method of forming a welded joint between two components, the method comprising: aligning a first and second component to form a joint therebetween, the joint comprising: a protrusion of the first component, and a recess of the second component, wherein the protrusion and recess have complimentary shapes; orienting the first and second components such that a major axis of each is oriented vertically; and welding the first and second components at a substantially horizontally-oriented root opening, the substantially horizontally-oriented root opening positioned along the joint.

In another embodiment, the invention provides a method of forming a welded joint between two metallic components of a device, the method comprising: obtaining a first component having: a substantially cylindrical body, a mating face along a surface of the body, the mating face including a protrusion, and a concave face extending away from the mating face and toward the body; obtaining a second component having: a substantially cylindrical body, a mating face along a surface of the body, the mating face including a recess having a shape complimentary to a shape of the protrusion of the mating face of the first component, and a concave face extending away from the mating face and toward the body; aligning the first and second components such that the protrusion of the mating face of the first component lies within the recess of the mating face of the second component and the concave faces of the first and second components form a horizontally-oriented root opening along adjacent surfaces of the substantially cylindrical bodies of the first and second components; and welding the first component to the second component across the horizontally-oriented root opening.

In still another embodiment, the invention provides a turbine rotor comprising: a first component having: a first body, a first mating face along a surface of the first body, the first mating face including a protrusion, and a first concave face extending away from the first mating face and toward the first body; a second component having: a second body, a second mating face along a surface of the second body, the second mating face including a recess having a shape complimentary to a shape of the protrusion of the first mating face, and a second concave face extending away from the second mating face and toward the second body; a root opening between the first and second components formed by the first and second concave faces; and a joint within the root opening, the joint formed by the protrusion and the recess and offset from a center of the root opening.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 shows a side cross-sectional view of components of a device suitable for forming a joint structure according to an embodiment of the invention
FIG 2 shows the components of FIG. 1 aligned to form a joint;
FIG. 3 shows a broader, cross-sectional elevation view of the components of FIG. 2;
FIG. 4 shows the components of FIG. 3 being welded according to an embodiment of the invention;
FIG. 5 shows a cross-sectional elevation view of aligned components according to another embodiment of the invention; and
FIG. 6 shows a flow diagram of a method according to an embodiment of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

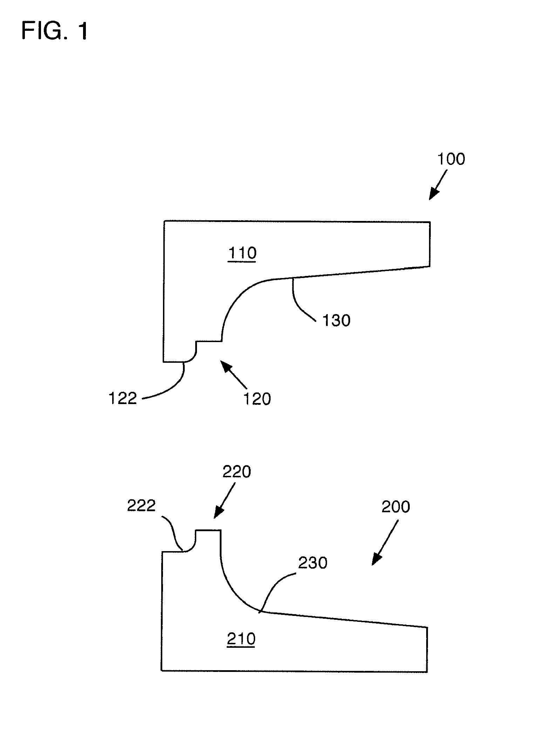

Referring now to the drawings, FIG. 1 shows a cross-sectional side view of a first component 100 and second component 200 of a steam turbine rotor or similar device. Each of the first and second components 100, 200 includes a body 110, 210, a mating face 120, 220, and a concave face 130, 230 extending away from the mating face 120, 220 toward the body 110, 210, respectively. Mating faces 120, 220 are substantially complimentarily shaped, such that they may form a joint structure. As shown in FIG. 1, mating face 120 of first component 100 includes a protrusion 122 extending outward from mating face 120, while mating face 220 of second component 200 includes a recess 222 into which protrusion 122 may reside.

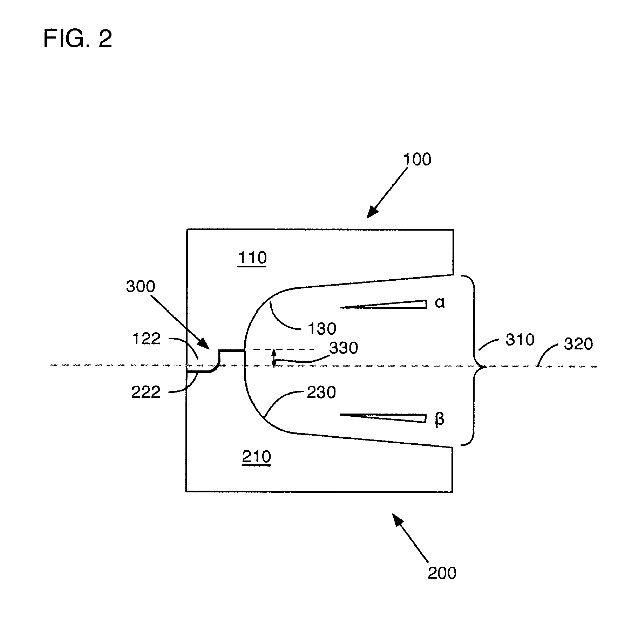

FIG. 2 shows first component 100 and second component 200 in a joined position and forming a joint 300 according to an embodiment of the invention. As can be seen in FIG. 2, concave face 130 of first component 100 and concave face 230 of second component form a root opening 310 (i.e., an opening between the components along which a weld may be formed). First component 100 and second component 200 will ultimately be joined by welding at root opening 310. As such, deposition of a filler metal into root opening 310 is facilitated by its angled shape. That is, at least a portion of concave face 130 forms an angle α above a horizontal plane 320 and at least a portion of concave face 230 forms an angle β below horizontal plane 320. Angles α and β are each, independently, between about 0 degrees and about 10 degrees. In some embodiments, each is between about 3 degrees and about 7 degrees. In some embodiments, each is about 5 degrees. As one skilled in the art will understand and as will be described and shown in greater detail below, horizontal plane 320 would lie along or parallel to the radial axes or radial planes of first component 100 and second component 200.

As can be seen in FIG. 2, joint 300 is offset 330 from the center of root opening 310, through which horizontal plane 320 lies. That is, the point at which first component 100 and second component 200 meet within root opening 310 is offset from the center of root opening 310. In FIG 2, offset 300 is displaced toward the component having protrusion 112, i.e., first component 100, although this is not essential.

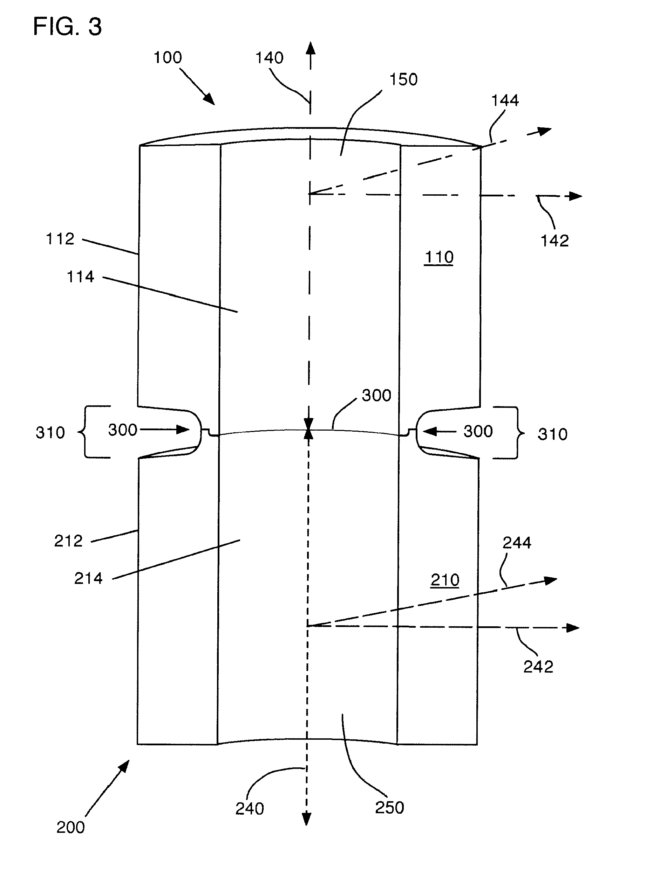

FIG. 3 shows a broader, elevational view of first component 100 and second component 200 of FIG. 2. As can be seen in FIG. 3, first component 100 and second component 200 may each include, respectively, a substantially cylindrical or tubular body 110, 210 having a bore 150, 250, a longitudinal axis 140, 240, and a plurality of radial axes 142, 144 and 242, 244. Although bodies 110 and 210 are described above as substantially cylindrical or tubular, it should be noted that the cross-sectional view of FIG. 3 shows only arcuate segments of each body. Root opening 310 opens along the outer surfaces 112, 212 of first component 100 and second component 200, respectively. First component 100 and second component 200 each further include an inner surface 114, 214 formed along their bores 150, 250, respectively.

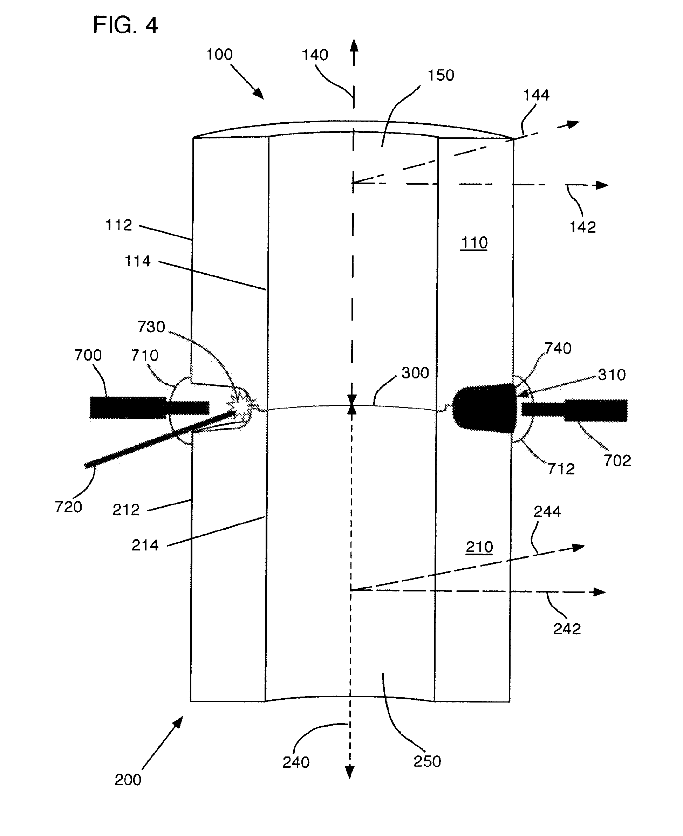

FIG. 4 shows first component 100 and second component 200 in position during welding, wherein their longitudinal axes 140, 240 are oriented substantially vertically. Consequently, their radial axes 142, 144 and 242, 244, and root opening 310, are oriented substantially horizontally.

As noted above, known GTAW methods, and particularly hot wire GTAW methods, are limited to welding in a flat position (i.e., with root opening 310 facing upward). As shown in FIG. 4, however, embodiments of the invention permit not only welding in a horizontal position (i.e., with root opening 310 opening substantially horizontally and longitudinal axes 140, 240 oriented substantially vertically), but also the use of a plurality of weld heads 700, 702. That is, weld heads 700, 702 are capable of simultaneously welding 730 at different points along root opening 310, with each weld head 700, 702 traveling about first and second components 100 while forming a weld 740.

In FIG. 4, weld head 700 is shown welding 730 along joint 300 as a filler rod 720 deposits a filler metal into root opening 310. As will be recognized by one skilled in the art, a shielding gas 710, 712 protects the welding 730 from atmospheric gasses, such as oxygen and nitrogen. Suitable shielding gasses 710, 712 include, but are not limited to, argon, helium, hydrogen, and mixtures thereof.

The filler metal deposited into root opening 310 will vary, of course, depending on any number of factors, including the materials of which the components are comprised. Suitable filler metals include, but are not limited to: nickel alloy, stainless steel, low alloy steel, high alloy steel, and mixtures thereof.

As to the composition of the components themselves, one skilled in the art will recognize that any number of materials may be employed and will vary, for example, depending on the application to which the components or the finished device will be put. As such, in some instances, the components themselves may be comprised of different materials. This is often the case, for example, in the case of components employed in steam turbine rotors, where steam of varying temperatures will contact the different components. In such a case, it may be desirable to choose the materials of each component based on the temperature of the steam to which it will be exposed, thereby controlling for such factors as thermal expansion. Non-limiting examples of the materials of which components may independently be comprised include, for example, stainless steel, carbon steel, nickel alloy, low alloy steel, high alloy steel, and mixtures thereof.

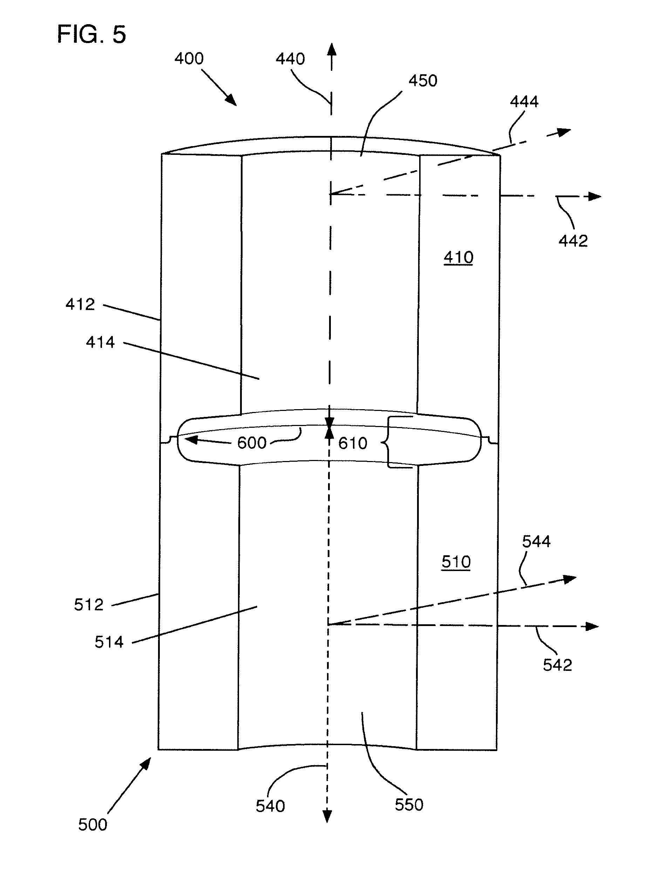

FIG. 5 shows another embodiment of the invention, wherein the root opening 610 opens along the inner surfaces 414, 514 of first component 400 and second component 500, respectively. That is, root opening 610 opens within the bores 450, 550 of first component 400 and second component 500, respectively. As such, forming a weld at joint 600 within root opening 610 requires passing a welding apparatus into one or both bores 450, 550. As in the embodiment shown in FIG. 4, welding in a substantially horizontal position using a plurality of weld heads is possible.

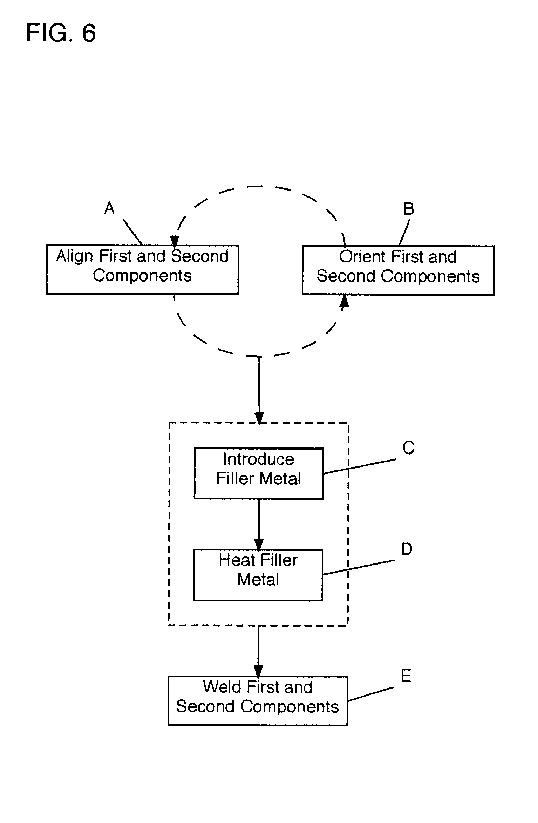

FIG. 6 shows a flow diagram of a method according to an embodiment of the invention. At A, first and second components 100, 200 (FIG 4) are aligned, such that protrusion 122 (FIG. 1) on mating face 120 (FIG. 1) of first component 100 lies within recess 222 (FIG 1) on mating face 220 (FIG. 1) of second component 200. Root opening 310 (FIG. 2) is thereby formed by concave faces 130, 230 (FIG. 2) of first component 100 and second component 200. At B, first and second components 100, 200 are oriented such that their longitudinal axes 140, 240, respectively, are substantially vertical and their radial axes 142, 144 and 242, 244 are substantially horizontal. As will be recognized by one skilled in the art the aligning of A and the orienting of B may be performed in either order or together. That is, in some embodiments of the invention, first and second components 100, 200 may first be aligned with respect to each other and then oriented such that their longitudinal and radial axes are oriented as described. In other embodiments of the invention, first and second components 100, 200 may first be oriented such that their longitudinal and radial axes are oriented as described and then aligned with respect to each other. In still other embodiments of the invention, first and second components 100, 200 may be both aligned and oriented at the same time.

At C, a filler metal may optionally be introduced into root opening 310. In such a case, the filler metal may optionally be heated to a temperature near its melting point (i.e., hot wire welding) at D.

Finally, at E, first and second components 100, 200 are welded 730 (FIG. 4) along root opening 310. As noted above, the welding at E may be performed in a substantially horizontal direction, may include a GTAW method, and may include simultaneous welding by a plurality of weld heads 700, 702 (FIG. 4).

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any related or incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

For completeness, various aspects of the invention are now set out in the following numbered clauses:
1. A method of forming a welded joint between two components, the method comprising:
   aligning a first and second component to form a joint therebetween, the joint comprising:
      a protrusion of the first component, and
      a recess of the second component,
      wherein the protrusion and recess have complimentary shapes;
      orienting the first and second components such that a major axis of each is oriented vertically; and
      welding the first and second components at a substantially horizontally-oriented root opening, the substantially horizontally-oriented root opening positioned along the joint.
2. The method of clause 1, wherein the welding includes welding along the substantially horizontally-oriented root opening.
3. The method of clause 1, wherein the welding includes simultaneously welding using a plurality of welding heads.
4. The method of clause 1, wherein the welding includes gas-tungsten-arc welding (GTAW).
5. The method of clause 4, wherein the GTAW employs a shielding gas selected from a group consisting of: argon, helium, hydrogen, and mixtures thereof.
6. The method of clause 4, wherein the welding further includes:
   introducing a filler metal into the horizontally-oriented root opening.
7. The method of clause 6, wherein the filler metal is selected from a group consisting of: nickel alloy, stainless steel, low alloy steel, high alloy steel, and mixtures thereof.
8. The method of clause 6, wherein the welding further includes:
   heating the filler metal to a temperature near a melting point of the filler metal.
9. The method of clause 1, wherein the first component is comprised of a first material and the second component is comprised of a second material different than the first material.
10. The method of clause 1, wherein each of the first and second component is independently comprised of at least one material selected from a group consisting of: stainless steel, carbon steel, nickel alloy, low alloy steel, high alloy steel, and mixtures thereof.
11. The method of clause 1, wherein the substantially horizontally-oriented root opening includes a first concave face of the first component and a second concave face of the second component, the first concave face being angled between about 0 degrees and about 10 degrees above horizontal and the second concave face being angled between about 0 degrees and about 10 degrees below horizontal.
12. A method of forming a welded joint between two metallic components of a device, the method comprising:
   obtaining a first component having:
      a substantially cylindrical body,
      a mating face along a surface of the body, the mating face including a protrusion, and
      a concave face extending away from the mating face and toward the body;
   obtaining a second component having:
      a substantially cylindrical body,
      a mating face along a surface of the body, the mating face including a recess having a shape complimentary to a shape of the protrusion of the mating face of the first component, and
      a concave face extending away from the mating face and toward the body;
      aligning the first and second components such that the protrusion of the mating face of the first component lies within the recess of the mating face of the second component and the concave faces of the first and second components form a horizontally-oriented root opening along adjacent surfaces of the substantially cylindrical bodies of the first and second components; and
      welding the first component to the second component across the horizontally-oriented root opening.
13. The method of clause 12, wherein the welding includes simultaneously welding the first component to the second component using a plurality of gast-tungsten-arc welding (GTAW) heads.
14. The method of clause 12, wherein the welding further includes:
   introducing a filler metal into the horizontally-oriented root opening, the filler metal including at least one metal selected from a group consisting of: nickel alloy, stainless steel, low alloy steel, high alloy steel, and mixtures thereof.
15. A turbine rotor comprising:
   a first component having:
      a first body,
      a first mating face along a surface of the first body, the first mating face including a protrusion, and
      a first concave face extending away from the first mating face and toward the first body;
   a second component having:
      a second body,
      a second mating face along a surface of the second body, the second mating face including a recess having a shape complimentary to a shape of the protrusion of the first mating face, and
      a second concave face extending away from the second mating face and toward the second body;
      a root opening between the first and second components formed by the first and second concave faces; and
      a joint within the root opening, the joint formed by the protrusion and the recess and offset from a center of the root opening.
16. The turbine rotor of clause 15, further comprising:
   a gas-tungsten-arc weld (GTAW) within the root opening, the GTAW including a filler metal selected from a group consisting of: nickel alloy, stainless steel, low alloy steel, high alloy steel, and mixtures thereof.
17. The turbine rotor of clause 15, wherein the first component is comprised of a first material and the second component is comprised of a second material different than the first material.
18. The turbine rotor of clause 17, wherein each of the first and second component is independently comprised of at least one material selected from a group consisting of: stainless steel, carbon steel, low alloy steel, high alloy steel, and nickel alloy.
19. The turbine rotor of clause 15, wherein the first concave face is angled between about 0 degrees and about 10 degrees from a radial axis of the first component and the second concave face is angled between about 0 degrees and about 10 degrees from a radial axis of the second component.

## Claims

1. A method of forming a welded joint between two components, the method comprising:
aligning a first and second component (100, 200) to form a joint (300) therebetween, the joint (300) comprising:
a protrusion (122) of the first component (100), and
a recess (222) of the second component (200),
wherein the protrusion (122) and recess (222) have complimentary shapes;
orienting the first and second components (100, 200) such that a major axis (140, 240) of each is oriented vertically; and
welding (730) the first and second components (100, 200) at a substantially horizontally-oriented root opening (310), the substantially horizontally-oriented root opening (310) positioned along the joint (300).

2. The method of claim 1, wherein the welding (730) includes welding along the substantially horizontally-oriented root opening (310).

3. The method of claim 1 or 2, wherein the welding (730) includes simultaneously welding using a plurality of welding heads (700, 702).

4. The method of any of the preceding claims, wherein the welding includes gas-tungsten-arc welding (GTAW).

5. The method of claim 4, wherein the GTAW employs a shielding gas (710, 712) selected from a group consisting of: argon, helium, hydrogen, and mixtures thereof.

6. The method of claim 4, wherein the welding (730) further includes:
introducing a filler metal (720) into the horizontally-oriented root opening.

7. The method of claim 6, wherein the filler metal (720) is selected from a group consisting of: nickel alloy, stainless steel, low alloy steel, high alloy steel, and mixtures thereof.

8. The method of claim 6, wherein the welding (730) further includes:
heating the filler metal (720) to a temperature near a melting point of the filler metal (720).

9. The method of any of the preceding claims, wherein the first component (100) is comprised of a first material and the second component (200) is comprised of a second material different than the first material.

10. The method of any of the preceding claims, wherein each of the first and second component (100, 200) is independently comprised of at least one material selected from a group consisting of: stainless steel, carbon steel, nickel alloy, low alloy steel, high alloy steel, and mixtures thereof.

11. A turbine rotor comprising:
a first component having:
a first body,
a first mating face along a surface of the first body, the first mating face including a protrusion, and
a first concave face extending away from the first mating face and toward the first body;
a second component having:
a second body,
a second mating face along a surface of the second body, the second mating face including a recess having a shape complimentary to a shape of the protrusion of the first mating face, and
a second concave face extending away from the second mating face and toward the second body;
a root opening between the first and second components formed by the first and second concave faces; and
a joint within the root opening, the joint formed by the protrusion and the recess and offset from a center of the root opening.

12. The turbine rotor of claim 11, further comprising:
a gas-tungsten-arc weld (GTAW) within the root opening, the GTAW including a filler metal selected from a group consisting of: nickel alloy, stainless steel, low alloy steel, high alloy steel, and mixtures thereof.

13. The turbine rotor of claim 11 or 12, wherein the first component is comprised of a first material and the second component is comprised of a second material different than the first material.

14. The turbine rotor of claim 13, wherein each of the first and second component is independently comprised of at least one material selected from a group consisting of: stainless steel, carbon steel, low alloy steel, high alloy steel, and nickel alloy.

15. The turbine rotor of any of claims 11 to 14, wherein the first concave face is angled between about 0 degrees and about 10 degrees from a radial axis of the first component and the second concave face is angled between about 0 degrees and about 10 degrees from a radial axis of the second component.
